# EUROPEAN PATENT APPLICATION

(11) **EP 2 056 180 A1**
(43) Date of publication of application: **06.05.2009**
(21) Application number: 07828152.4
(22) Date of filing: 21.06.2007
(51) Int. Cl.: G05F 1/67, B60L 11/18, H01L 31/04

(54) **SOLAR PHOTOVOLTAIC POWER GENERATION SYSTEM, VEHICLE, SOLAR PHOTOVOLTAIC POWER GENERATION SYSTEM CONTROL METHOD, AND COMPUTER READABLE RECORDING MEDIUM HAVING RECORDED THEREIN PROGRAM FOR CAUSING COMPUTER TO EXECUTE THAT CONTROL METHOD**

(30) Priority: 11.08.2006 JP 2006219866
(71) Applicant: Toyota Jidosha Kabushiki Kaisha, Toyota-shi, Aichi 471-8571 (JP)
(72) Inventor: SATO, Eiji, Toyota-shi, Aichi 471-8571 (JP)
(74) Representative: TBK-Patent
(86) International application number: PCT/JP2007/062960
(87) International publication number: WO 2008/018250

(57) **Abstract**

A charge control ECU (40) stops a charge converter (20) periodically or at a predetermined timing, and detects the open-circuit voltage of a solar cell (30) through a voltage sensor (50). The charge control ECU (40) uses a preset relational expression or map to determine the operating voltage corresponding to a maximum output power from the solar cell (30) based on the detected open-circuit voltage. The charge control ECU (40) causes the charge converter (20) to resume its operation when the determined operating voltage is set at the charge converter (20) as the target voltage (VR).

## Description

### Technical Field

The present invention relates to a solar photovoltaic power generation system with a solar cell as a power source, and a vehicle having a solar cell incorporated as a power source.

### Background Art

Japanese Patent Laying-Open No. 2003-84844 discloses a maximum power control method for a solar cell. This control method includes the steps of altering the target operating voltage of the solar cell by a command value of the output current of a power conversion device, obtaining the difference between the output power at the previous target operating voltage and the output power at the current target operating voltage, and setting the target operating voltage to substantially coincide with the maximum output operating voltage at which the difference is smallest. In the stage of altering the target operating voltage by control of the current command value, the difference between the output power at the previous target operating voltage and the output power at the current target operating voltage is divided by the output power at the current target operating voltage, and the target operating voltage is altered according to the value obtained by the division.

Accordingly, the variation range in altering the target operating voltage becomes relatively smaller as the output power approaches the maximum power. Therefore, variation in the target operating voltage in the vicinity of the maximum power can be suppressed even when the amount of insolation is reduced, allowing the target operating voltage to promptly follow the maximum output operating voltage.

In the maximum power control method disclosed in Japanese Patent Laying-Open No. 2003-84844, the output power of the solar cell is calculated, and feedback control is effected based on the calculated output power. Therefore, delay in follow-up control will occur when there is an abrupt change in the amount of insolation, rendering the maximum power control unstable. This may lead to reduction in the power generation efficiency. Particularly in the case where a solar cell is mounted on a vehicle as the vehicle power source, the aforementioned problem will become noticeable since the change in the amount of insolation is significant as compared to the case where the solar cell is fixedly installed as for a residence-oriented power supply.

The maximum power control method set forth above requires a current detector for calculating the power, and also a high speed processing unit to realize feedback control. Accordingly, the cost of the system increases.

### Disclosure of the Invention

In view of the foregoing, an object of the present invention is to provide a solar photovoltaic power generation system that can realize stable maximum power control even if there is an abrupt change in the amount of insolation.

Another object of the present invention is to provide a vehicle incorporating a solar cell as a vehicle power supply, and that can realize stable maximum power control even if there is an abrupt change in the amount of insolation.

A further object of the present invention is to provide a control method for a solar photovoltaic power generation system that can realize stable maximum power control even if there is an abrupt change in the amount of insolation, and a computer-readable recording medium recorded with a program to cause a computer to execute the control method.

Another object of the present invention is to provide a solar photovoltaic power generation system that can have the system cost reduced.

Another object of the present invention is to provide a vehicle incorporating a solar cell as a vehicle power supply, and that can have the system cost reduced.

Another object of the present invention is to provide a control method for a solar photovoltaic power generation system that can have the system cost reduced, and a computer readable recording medium recorded with a program to cause a computer to execute the control method.

According to the present invention, a solar photovoltaic power generation system includes a solar cell, a voltage control device, and a control unit. The voltage control device is connected to the solar cell, and configured to allow control of an output voltage of the solar cell to be equal to a set target voltage. The control unit determines an operating voltage of the solar cell based on an open-circuit voltage of the solar cell, and sets the determined operating voltage as the target voltage.

Preferably, the solar photovoltaic power generation system further includes a voltage detection device. The voltage detection device detects the output voltage of the solar cell. The control unit determines the operating voltage of the solar cell based on the open-circuit voltage of the solar cell detected by the voltage detection device when power generation by the solar cell is stopped.

Further preferably, the control unit temporarily stops the voltage control device periodically or at a preset timing, and causes the voltage control device to resume its operation after the target voltage is set.

Preferably, the solar photovoltaic power generation system further includes a temperature detection device. The temperature detection device detects the temperature of the solar cell. The control unit estimates the open-circuit voltage of the solar cell based on the temperature of the solar cell detected by the temperature detection device.

Further preferably, the control unit fetches the temperature of the solar cell from the temperature detection device periodically or at a preset timing to estimate the open-circuit voltage.

Preferably, the solar photovoltaic power generation system further includes a measurement-directed solar cell that is not connected with the voltage control device. The control unit determines the operating voltage of the solar cell based on the open-circuit voltage of the measurement-directed solar cell.

Further preferably, the control unit fetches the open-circuit voltage of the measurement-directed solar cell periodically or at a preset timing to determine the operating voltage.

According to the present invention, a vehicle includes a chargeable power storage device, a driving device, a solar cell, a voltage conversion device, and a control unit. The driving device is configured to allow generation of a motive force of the vehicle using the power output from the power storage device. The voltage conversion device is provided between the solar cell and power storage device, and is configured to convert power received from the solar cell to a voltage level of the power storage device such that the power storage device can be charged while controlling the output voltage of the solar cell to be equal to a set target voltage. The control unit determines the operating voltage of the solar cell based on the open-circuit voltage of the solar cell to set the determined operating voltage as the target voltage.

Preferably, the vehicle further includes a voltage detection device. The voltage detection device detects the output voltage of the solar cell. The control unit determines the operating voltage of the solar cell based on the open-circuit voltage of the solar cell detected by the voltage detection device when power generation of the solar cell is stopped.

Further preferably, the control unit temporarily stops the voltage conversion device periodically or at a preset timing, and causes the voltage conversion device to resume its operation after the target voltage is set.

Preferably, the vehicle further includes a temperature detection device. The temperature detection device detects the temperature of the solar cell. The control unit estimates the open-circuit voltage of the solar cell based on the temperature of the solar cell detected by the temperature detection device.

Further preferably, the control unit fetches the temperature of the solar cell from the temperature detection device periodically or at a preset timing to estimate the open-circuit voltage.

Preferably, the vehicle further includes a measurement-directed solar cell that is not connected with the voltage conversion device. The control unit determines the operating voltage of the solar cell based on the open-circuit voltage of the measurement-directed solar cell.

Further preferably, the control unit fetches the open-circuit voltage of the measurement-directed solar cell periodically or at a preset timing to determine the operating voltage.

According to the present invention, the control method is directed to a solar photovoltaic power generation system. The solar photovoltaic power generation system includes a solar cell, and a voltage control device. The voltage control device is connected to the solar cell, and is configured to allow control of an output voltage of the solar cell to be equal to a set target voltage. The control method includes a first step of determining an operating voltage of the solar cell based on an open-circuit voltage of the solar cell, and a second step of setting the determined operating voltage as the target voltage.

Preferably, the control method further includes a third step of detecting the output voltage of the solar cell. At the first step, the operating voltage of the solar cell is determined based on the open-circuit voltage of the solar cell detected when power generation of the solar cell is stopped.

Further preferably, the control method further includes a fourth step of temporarily stopping the voltage control device periodically or at a preset timing, and a fifth step of causing the voltage control device to resume its operation after the operating voltage is determined at the first step and the target voltage is set at the second step during stoppage of the voltage control device.

Preferably, the control method further includes a sixth step of detecting the temperature of the solar cell. In the first step, the open-circuit voltage of the solar cell is estimated based on the detected temperature of the solar cell.

Further preferably, in the first step, the open-circuit voltage is estimated based on the temperature of the solar cell that is detected periodically or at a preset timing.

Preferably, the solar photovoltaic power generation system further includes a measurement-directed solar cell that is not connected with the voltage control device. In the first step, the operating voltage of the solar cell is determined based on the open-circuit voltage of the measurement-directed solar cell.

Further preferably, in the first step, the operating voltage is determined based on the open-circuit voltage of the measurement-directed solar cell fetched periodically or at a preset timing.

According to the present invention, a computer-readable recording medium is recorded with a program to cause a computer to execute any of the control methods set forth above.

In the present invention, the operating voltage of the solar cell is determined based on the open-circuit voltage of the solar cell. As used herein, the open-circuit voltage has low sensitivity with respect to a change in the amount of insolation due to the solar cell property. The operating voltage corresponding to the maximum output power from the solar cell can be identified from the open-circuit voltage based on the output property of the solar cell. In the present invention, the operating voltage of the solar cell is determined based on the open-circuit voltage of the solar cell that has low sensitivity with respect to change in the amount of insolation, without carrying out feedback control using an output power that varies greatly according to change in the amount of insolation.

According to the present invention, stable maximum power control can be implemented even if there is an abrupt change in the amount of insolation. As a result, reduction in the power generation efficiency can be prevented.

According to the present invention, the system cost can be reduced since a current detector for calculating power, and/or a high speed processing unit to realize feedback control are dispensable.

### Brief Description of the Drawings

Fig. 1 is an entire block diagram of a vehicle according to a first embodiment of the present invention.
Fig. 2 represents the voltage-current properties of the solar cell of Fig. 1.
Fig. 3 represents the voltage-power properties of the solar cell of Fig. 1.
Fig. 4 is a flow chart representing a control configuration of a charge control ECU of Fig. 1.
Fig. 5 represents a configuration of a charge converter of Fig. 1.
Fig. 6 is an entire block diagram of a vehicle according to a second embodiment.
Fig. 7 represents the voltage-current properties of the solar cell.
Fig. 8 represents the voltage-power properties of the solar cell.
Fig. 9 is a flow chart representing a control configuration of a charge control ECU of the second embodiment.
Fig. 10 is an entire block diagram of a vehicle according to a third embodiment.
Fig. 11 is a flow chart representing a control configuration of a charge control ECU according to a third embodiment.

### Best Modes for Carrying Out the Invention

Embodiments of the present invention will be described in detail hereinafter with reference to the drawings. In the drawings, the same or corresponding elements have the same reference characters allotted, and the description thereof will not be repeated.

### [First Embodiment]

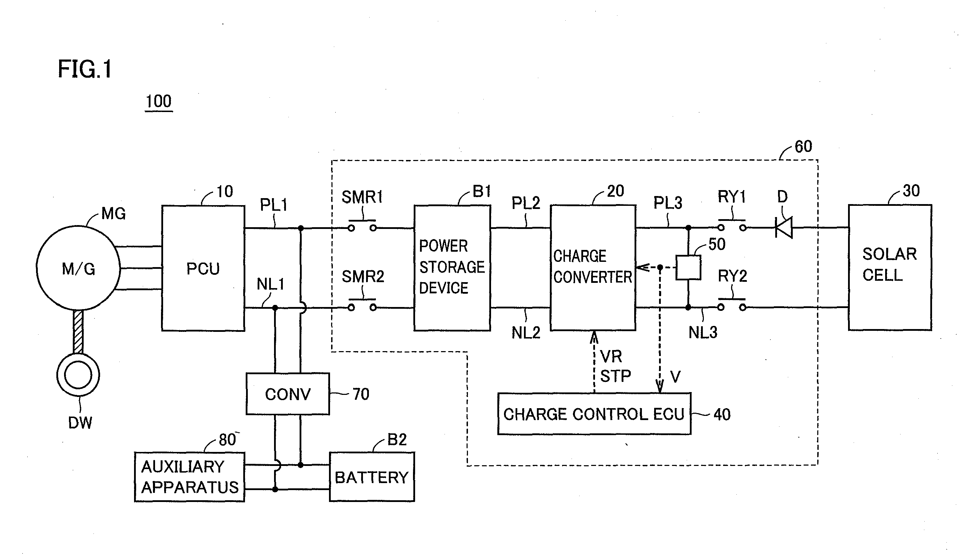

Fig. 1 is an entire block diagram of a vehicle according to a first embodiment of the present invention. Referring to Fig. 1, a vehicle 100 includes a power storage device B1, system main relays SMR1 and SMR2, a power control unit (hereinafter, also referred to as PCU) 10, a motor generator MG, and a driving wheel DW. Vehicle 100 also includes a converter 20 for charging, relays RY1 and RY2, a diode D, a solar cell 30, a charge control ECU (Electronic Control Unit) 40, and a voltage sensor 50. Additionally, vehicle 100 further includes a DC-DC converter 70, an auxiliary battery B2, and an auxiliary apparatus 80.

System main relays SMR1 and SMR2, power storage device B1, charge converter 20, voltage sensor 50, relays RY1 and RY2, diode D and charge control ECU 40 are stored in a battery pack 60. System main relay SMR1 is connected between the positive electrode of power storage device B1 and a positive line PL1. System main relay SMR2 is connected between the negative electrode of power storage device B1 and a negative line NL1. PCU 10 is provided between positive and negative lines PL1 and NL1 and motor generator MG. Driving wheel DW is mechanically linked with the rotational shaft of motor generator MG. DC-DC converter 70 is connected to positive line PL1 and negative line NL1. DC-DC converter 70 has its output end connected to auxiliary battery B2 and auxiliary apparatus 80.

Charge converter 20 is provided between positive and negative lines PL2 and NL2 connected to power storage device B1, and positive and negative lines PL3 and NL3. Relay RY1 and diode D1 are connected in series between positive line PL3 and the positive electrode of solar cell 30. Relay RY2 is connected between negative line NL3 and the negative electrode of solar cell 30. Diode D has its anode connected to the positive electrode of solar cell 30, and its cathode connected to relay RY1.

Power storage device B 1 is a chargeable direct current power supply, formed of a secondary battery such as a nickel-metal hydride battery or lithium ion battery. Power storage device B1 outputs the accumulated power to positive line PL1 and negative line NL1 via system main relays SMR1 and SMR2. Power storage device B1 is charged by PCU 10 that rectifies the regenerative power from motor generator MG for output onto positive line PL1 and negative line NL1. Further, power storage device B1 is charged by charge converter 20 that converts the power from solar cell 30 into a voltage for output onto positive line PL2 and negative line NL2. Power storage device B1 may be configured of a capacitor of a large capacitance.

System main relays SMR1 and SMR2 are turned on when vehicle 100 has its system actuated, and electrically connects power storage device B1 with positive line PL1 and negative line NL1. PCU 10 drives motor generator MG using the power supplied from power storage device B 1. In a vehicle regenerative braking mode, PCU 10 rectifies the regenerative power from motor generator MG for output onto positive line PL1 and negative line NL1 to charge power storage device B1. PCU 10 is formed of, for example, an inverter, and a controller that drives the inverter. PCU 10 may include a boost converter to boost the voltage from positive line PL1 and negative line NL1.

Motor generator MG receives the power supplied from PCU 10 to generate rotational driving force, which is output to driving wheel DW. In a vehicle regenerative braking mode, motor generator MG generates regenerative electric power using the rotational force from driving wheel DW. Motor generator MG is formed of, for example, a three-phase AC rotating electric machine including a rotor in which a permanent magnet is embedded.

DC-DC converter 70 down-converts the DC power received from positive line PL1 and negative line NL1 for output to auxiliary battery B2 and auxiliary apparatus 80. Auxiliary battery B2 accumulates the DC power supplied from DC-DC converter 70. Auxiliary apparatus 80 corresponds to a generic representation of various auxiliary devices in vehicle 100.

Voltage sensor 50 detects the input voltage of charge converter 20, i.e. the output voltage of solar cell 30 (hereinafter, also referred to as "operating voltage"), and provides detected voltage V to charge converter 20 and charge control ECU 40.

Charge converter 20 converts the power supplied from solar cell 30 to the voltage level of power storage device B1 to charge the same. At this stage, charge converter 20 receives target voltage VR and detected voltage V from charge control ECU 40 and voltage sensor 50, respectively, to adjust the input voltage of charge converter 20 (namely, the operating voltage of solar cell 30) such that the input voltage is equal to target voltage VR. Charge converter 20 stops its operation upon receiving a stop command STP from charge control ECU 40.

Relays RY1 and RY2 are turned on by charge control ECU 40 when charging of power storage device B1 from solar cell 30 is effected, and electrically connects solar cell 30 with positive line PL3 and negative line NL3. Diode D prevents the current flow from charge converter 20 to solar cell 30 from flowing in the reverse direction.

Charge control ECU 40 turns on relays RY1 and RY2 when charging of power storage device B1 from solar cell 30 is carried out. Charge control ECU 40 determines the operating voltage of solar cell 30 based on the open-circuit voltage of solar cell 30, by a method that will be described afterwards, and provides the determined operating voltage to charge converter 20 as target voltage VR of the input voltage to charge converter 20.

The charging of power storage device B1 by solar cell 30 can be carried out regardless of whether vehicle 100 is in a running permitted state (ON state for system main relays SMR1 and SMR2) or a non-running state (OFF state for system main relays SMR1 and SMR2).

The concept of the operating voltage of solar cell 30 determined by charge control ECU 40 shown in Fig. 1 will be described hereinafter.

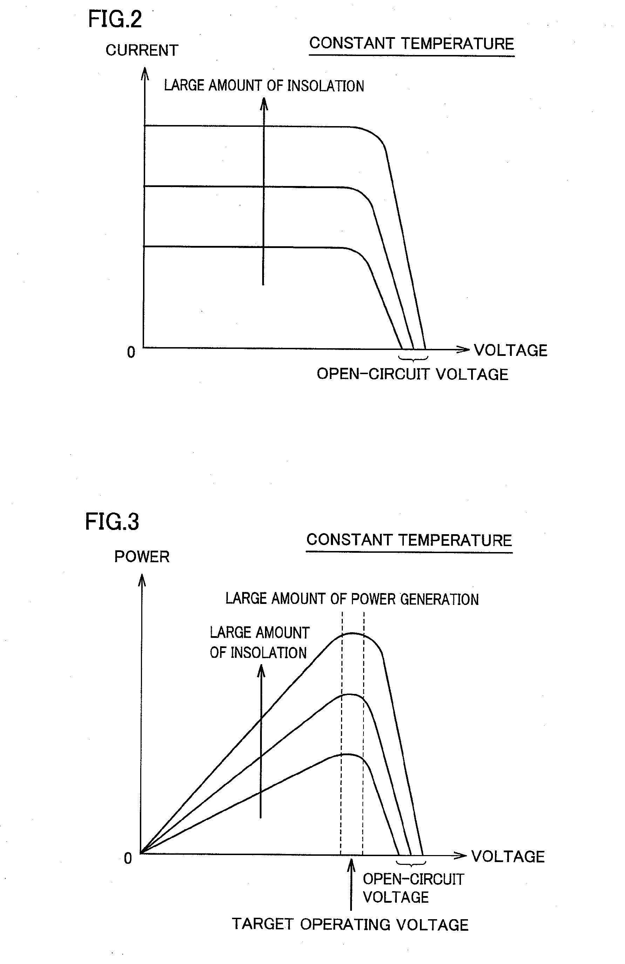

Fig. 2 represents the voltage-current properties of solar cell 30 of Fig. 1. Referring to Fig. 2, the horizontal axis and vertical axis represent the operating voltage (output voltage) and output current of solar cell 30, respectively. Fig. 2 represents the voltage-current properties under the condition that the temperature of solar cell 30 is constant.

The output current of solar cell 30 depends greatly on the amount of insolation solar cell 30 receives, and increases as the amount of insolation is greater. Under a constant insolation condition, the output current is substantially constant irrespective of the operating voltage, and is reduced abruptly when the operating voltage exceeds a predetermined level.

The operating voltage at which the output current begins to drop abruptly and the operating voltage at which the output current becomes 0 (corresponding to the open-circuit voltage of solar cell 30) do not vary so much even if the amount of insolation changes under a constant condition of the temperature of solar cell 30.

Fig. 3 represents the voltage-power properties of solar cell 30 of Fig. 1. Referring to Fig. 3, the horizontal axis and vertical axis represent the operating voltage (output voltage) and output power of solar cell 30, respectively. Fig. 3 represents the voltage-power properties under the condition that the temperature of solar cell 30 is constant.

Based on the voltage-current properties shown in Fig. 2, the output power of solar cell 30 depends greatly on the amount of insolation solar cell 30 receives, and increases as the amount of insolation is greater. Under a constant insolation condition, the output power increases with the rise of the operating voltage, and drops abruptly after the peak when the operating voltage attains a predetermined level.

The operating voltage at which the output power becomes 0 corresponds to the open-circuit voltage of solar cell 30, and the open-circuit voltage greatly depends on the temperature of solar cell 30, according to the property of solar cell 30. However, the open-circuit voltage does not vary so much even if the amount of insolation changes under the condition that the temperature is constant. Further, the temperature of solar cell 30 will not suddenly change by the heat capacity even if the amount of insolation varies. Namely, the open-circuit voltage has low sensitivity with respect to change in the amount of insolation. The operating voltage corresponding to the maximum output power from the solar cell can be identified from the open-circuit voltage based on the output property of solar cell 30.

The first embodiment is directed to measuring the open-circuit voltage of solar cell 30 periodically or at a preset timing, and determining the operating voltage corresponding to the maximum output power (target operating voltage) based on open-circuit voltage that has low sensitivity with respect to change in the amount of insolation.

Although the open-circuit voltage of solar cell 30 greatly depends upon the temperature of solar cell 30, it is to be noted that the temperature of solar cell 30 will not suddenly change due to the heat capacity of solar cell 30. Therefore, by measuring the open-circuit voltage to determine the operating voltage periodically or at a predetermined timing before there is a great change in the temperature of solar cell 30, power that is substantially in the vicinity of the maximum level can be fetched from solar cell 30 without having to conduct feedback control.

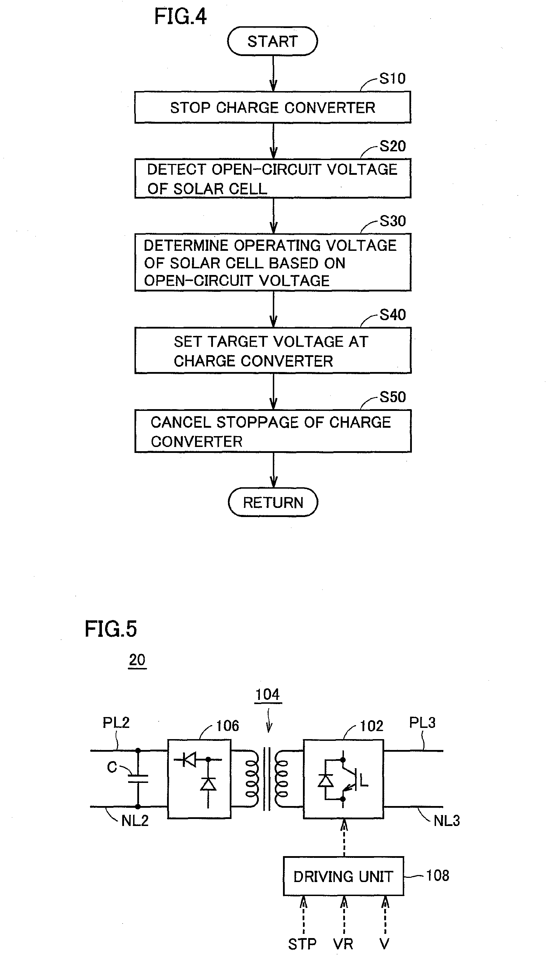

Fig. 4 is a flow chart of a control configuration of charge control ECU 40 shown in Fig. 1. The process in this flowchart is invoked from the main routine periodically or at a preset timing to be executed.

Referring to Figs. 1 and 4, charge control ECU 40 outputs a stop command STP to charge converter 20 periodically or at a preset timing to stop charge converter 20 (step S10). Then, charge control ECU 40 fetches detected voltage V from voltage sensor 50 to detect the open-circuit voltage of solar cell 30 (step S20).

Charge control ECU 40 determines the operating voltage of solar cell 30 based on the detected open-circuit voltage (step S30). Specifically, a predetermined relational expression or map representing the relationship between an open-circuit voltage and an operating voltage corresponding to the maximum output power from solar cell 30 is prepared in advance based on the output property of solar cell 30. Charge control ECU 40 uses the predetermined relational expression or map to determine the operating voltage of solar cell 30 based on the detected open-circuit voltage.

Upon determining the operating voltage of solar cell 30, charge control ECU 40 sets that operating voltage at charge converter 20 as the target voltage VR of charge converter 20 (input voltage target value of charge converter 20) (step S40).

When target voltage VR is set at charge converter 20, charge control ECU 40 suppresses the output of stop command STP to charge converter 20 to cancel the stoppage of charge converter 20 (step S50). Then, charge converter 20 adjusts the input voltage (namely, the operating voltage of solar cell 30) to be equal to target voltage VR.

Fig. 5 is a schematic diagram of a configuration of charge converter 20 of Fig. 1. Referring to Fig. 5, charge converter 20 includes a direct-alternating transducer 102, an insulation transformer 104, a rectifier 106, a smoothing capacitor C, and a driving unit 108. Orthogonal transducer 102 includes a switching element that is driven on/off by driving unit 108 to convert the DC power supplied from positive line PL3 and negative line NL3 into AC power according to a control signal from driving unit 108 for output to insulation transformer 104.

Insulation transformer 104 provides insulation between the primary side and secondary side, and converts voltage according to the coil winding ratio. Rectifier 106 rectifies the AC power output from insulation transformer 104 into DC power for output onto positive line PL2 and negative line NL2. Smoothing capacitor C reduces the AC component in the DC voltage between positive line PL2 and negative line NL2.

Driving unit 108 receives target voltage VR from charge control ECU 40 (not shown), and detected voltage V between positive line PL3 and negative line NL3 from voltage sensor 50 (not shown). Driving unit 108 drives orthogonal transducer 102 such that the voltage between positive line PL3 and negative line NL3 (namely, the operating voltage of solar cell 30) becomes equal to target voltage VR.

More specifically, since the voltage between positive line PL3 and negative line NL3 connected to power storage device B1 is restricted by power storage device B1 at the voltage thereof, the output voltage (alternating current) of orthogonal transducer 102 is restricted to the predetermined level. Therefore, by controlling the modulation factor of orthogonal transducer 102, the voltage between positive line PL3 and negative line NL3, i.e. the operating voltage of solar cell 30, can be controlled.

Upon receiving a stop command STP from charge control ECU 40, driving unit 108 shuts down orthogonal transducer 102. Accordingly, the open-circuit voltage of solar cell 30 connected to positive line PL3 and negative line NL3 can be measured.

In the first embodiment set forth above, the open-circuit voltage of solar cell 30 is detected periodically or at a preset timing, and the operating voltage corresponding to the maximum output power is determined based on the detected open-circuit voltage. In other words, the first embodiment is dispensed with feedback control that uses output power that varies greatly according to change in the amount of insolation, and an operating voltage corresponding to the maximum output power from the solar cell is determined based on open-circuit voltage that has low sensitivity with respect to change in the amount of insolation.

According to the present first embodiment, stable maximum power control can be implemented even if there is an abrupt change in the amount of insolation received at solar cell 30 during a cruising operation of vehicle 100. As a result, reduction in the power generation efficiency of solar cell 30 that may occur due to unstable control can be prevented.

Since a current detector for calculating the power and/or a high speed processing device to realize feedback control is not required in the first embodiment, the system cost can be reduced.

### [Second Embodiment]

In the first embodiment, power generation by solar cell 30 was temporarily suppressed and the open-circuit voltage of solar cell 30 was detected. In the second embodiment, the temperature of solar cell 30 is detected, and the open-circuit voltage is estimated based on the detected temperature.

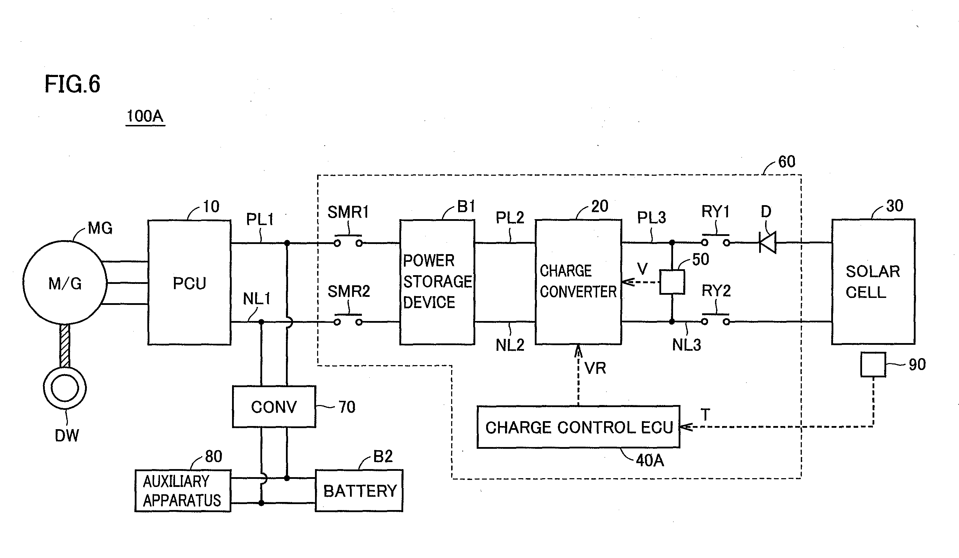

Fig. 6 is an entire block diagram of a vehicle according to the second embodiment. Referring to Fig. 6, a vehicle 100A additionally includes a temperature sensor 90, based on the configuration of vehicle 100 of the first embodiment shown in Fig. 1, and has a charge control ECU 40A instead of charge control ECU 40.

Temperature sensor 90 detects a temperature T of solar cell 30, and provides the detected value to charge control ECU 40A. Charge control ECU 40A estimates the open-circuit voltage of solar cell 30 based on temperature T of solar cell 30 detected by temperature sensor 90, and determines the operating voltage corresponding to the maximum output power based on the estimated open-circuit voltage.

The remaining function of charge control ECU 40A is similar to that of charge control ECU 40A of the first embodiment. Further, the remaining configuration of vehicle 100A is similar to that of vehicle 100 of the first embodiment.

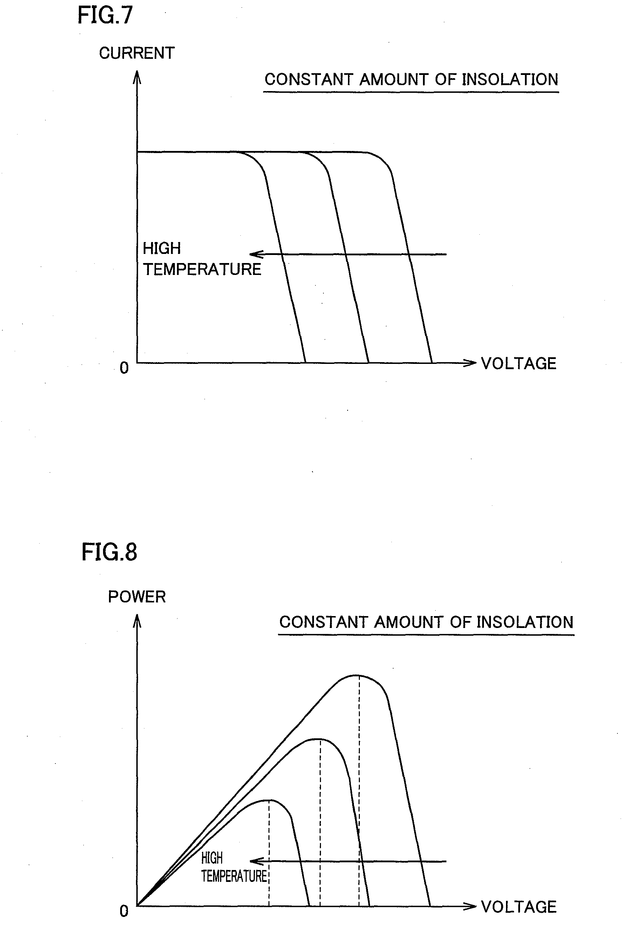

Fig. 7 represents the voltage-current properties of solar cell 30. Referring to Fig. 7, the horizontal axis and vertical axis represent the operating voltage (output voltage) and output current of solar cell 30, respectively. Fig. 7 represents the voltage-current properties under the condition that the amount of insolation received at solar cell 30 is constant.

The operable voltage and open-circuit voltage of solar cell 30 depend greatly on the temperature of solar cell 30, and become lower as the temperature of solar cell 30 increases.

Fig. 8 represents the voltage-power properties of solar cell 30. Referring to Fig. 8, the horizontal axis and vertical axis represent the operating voltage (output voltage) and output power of solar cell 30, respectively. Fig. 8 represents the voltage-power properties under the condition that the amount of insolation received at solar cell 30 is constant.

Based on the voltage-current properties shown in Fig. 7, the operating voltage corresponding to the maximum output power from solar cell 30 and open-circuit voltage of solar cell 30 depend greatly on the temperature of solar cell 30, and becomes lower as the temperature of solar cell 30 rises. As shown in Fig. 3, the operating voltage corresponding to the maximum output power and the open-circuit voltage have low sensitivity with respect to change in the amount of insolation. Therefore, the operating voltage corresponding to the maximum output power and the open-circuit voltage can be identified substantially by the temperature of solar cell 30.

In view of the foregoing, the second embodiment is directed to estimating the open-circuit voltage by measuring the temperature of solar cell 30, and determining the operating voltage corresponding to the maximum output power, based on the estimated open-circuit voltage.

The temperature of solar cell 30 will not suddenly change due to the heat capacity of solar cell 30. Therefore, by measuring the temperature of solar cell 30 to determine the operating voltage periodically or at a predetermined timing before there is a great change in the temperature of solar cell 30, power that is substantially in the vicinity of the maximum level can be fetched from solar cell 30 without having to conduct feedback control.

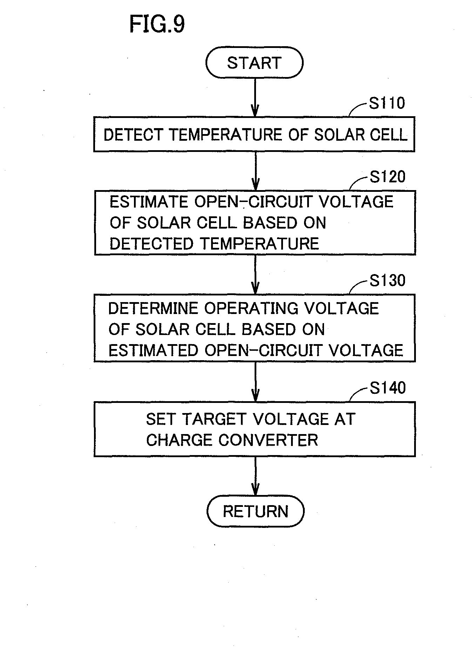

Fig. 9 is a flowchart of a control configuration of charge control ECU 40A according to the second embodiment. The process of the flowchart is invoked from the main routine periodically or at a preset timing to be executed.

Referring to Figs. 6 and 9, charge control ECU 40A fetches temperature T of solar cell 30 detected by temperature sensor 90 periodically or at a preset timing (step S110).

Then, charge control ECU 40A estimates the open-circuit voltage of solar cell 30 based on the fetched detected temperature (step S120). Specifically, a predetermined relational expression or map representing the relationship between the temperature of solar cell 30 and the open-circuit voltage is prepared in advance based on the output property of solar cell 30. Charge control ECU 40A uses the relationship expression or map to estimate the open-circuit voltage based on detected temperature T.

Charge control ECU 40A determines the operating voltage of solar cell 30 based on the estimated open-circuit voltage (step S130). Specifically, a predetermined relational expression or map representing the relationship between an open-circuit voltage and an operating voltage corresponding to the maximum output power from solar cell 30 is prepared in advance based on the output property of solar cell 30. Charge control ECU 40A uses the predetermined relational expression or map to determine the operating voltage of solar cell 30 based on the detected open-circuit voltage.

Upon determining the operating voltage of solar cell 30, charge control ECU 40A sets that operating voltage at charge converter 20 as target voltage VR of charge converter 20 (input voltage target value of charge converter 20) (step S140).

The above description is based on the case where the open-circuit voltage is estimated based on temperature T of solar cell 30, and the operating voltage corresponding to the maximum output power is determined based on the estimated open-circuit voltage. Since the operating voltage corresponding to the maximum output power can be determined based on the open-circuit voltage according to the output property of solar cell 30, the operating voltage corresponding to the maximum output power may be directly determined based on temperature T of solar cell 30.

According to the second embodiment, more charge to power storage device B1 from solar cell 30 can be ensured, as compared to the first embodiment, since the open-circuit voltage does not have to be detected with the power generation of solar cell 30 temporarily stopped.

Further, since voltage variation in power storage device B1 caused by the stoppage/activation of power generation by solar cell 30 is eliminated, the operation of motor generator MG and auxiliary apparatus 80 receiving power supply from power storage device B1 becomes stable.

### [Third Embodiment]

In the third embodiment, a measurement-directed solar cell is provided in a non-connecting manner with charge converter 20, and the operating voltage of solar cell 30 is determined based on the open-circuit voltage of the measurement-directed solar cell.

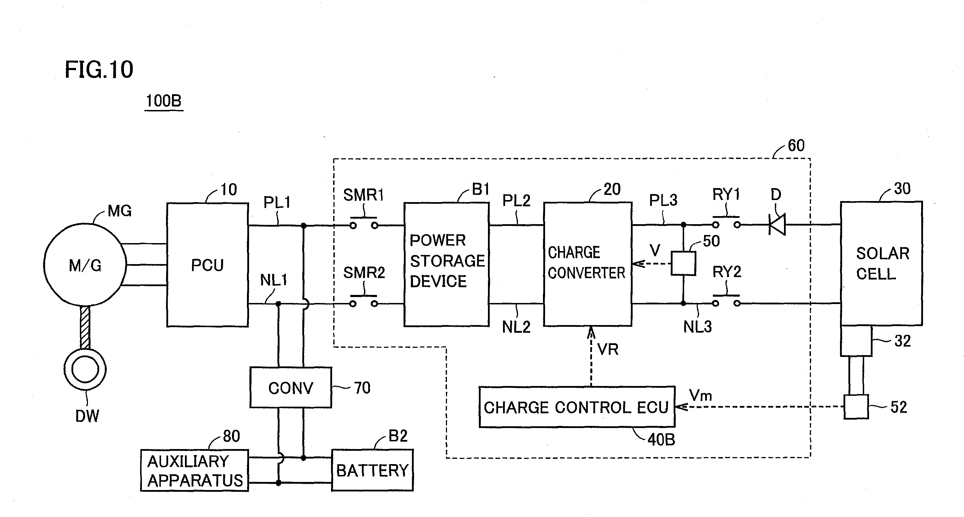

Fig. 10 is an entire block diagram of a vehicle according to a third embodiment. Referring to Fig. 10, a vehicle 100B additionally includes a measurement-directed solar cell 32 and a voltage sensor 52, based on the configuration of vehicle 100 of the first embodiment shown in Fig. 1, and has a charge control ECU 40B instead of charge control ECU 40.

Measurement-directed solar cell 32 is a solar cell directed to measuring the open-circuit voltage, and is not electrically connected with solar cell 30 and charge converter 20. Since measurement-directed solar cell 32 is not used for power generation, a small and economic one may be employed therefor. Voltage sensor 52 detects open-circuit voltage Vm of measurement-directed solar cell 32, and provides the detected value to charge control ECU 40B.

Charge control ECU 40B determines the operating voltage corresponding to the maximum output power from solar cell 30 based on open-circuit voltage Vm of measurement-directed solar cell 32 detected by voltage sensor 52.

The remaining function of charge control ECU 40B is similar to that of charge control ECU 40 of the first embodiment. Further, the remaining configuration of vehicle 100B is similar to that of vehicle 100 of the first embodiment.

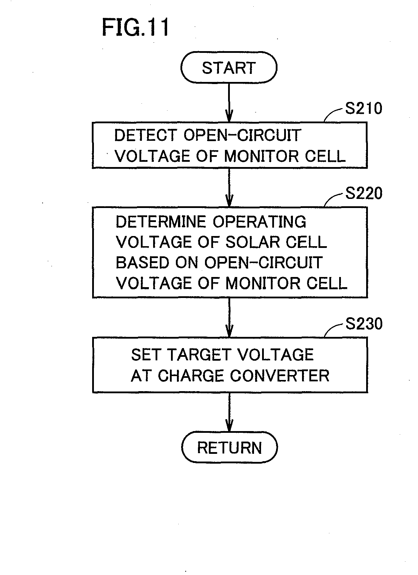

Fig. 11 is a flowchart of a control configuration of charge control ECU 40B according to the third embodiment. The process in this flowchart is invoked from the main routine periodically or at a preset timing to be executed.

Referring to Figs. 10 and 11, charge control ECU 40B fetches open-circuit voltage Vm of measurement-directed solar cell 32 detected by voltage sensor 52 periodically or at a preset timing (step S210).

Then, charge control ECU 40B determines the operating voltage of solar cell 30 based on the detected open-circuit voltage Vm (step S220). Specifically, a predetermined relational expression or map representing the relationship between an open-circuit voltage of measurement-directed solar cell 32 and an operating voltage corresponding to the maximum output power from solar cell 30 is prepared in advance based on the output property of solar cell 30 and measurement-directed solar cell 32. Charge control ECU 40B uses the predetermined relational expression or map to determine the operating voltage of solar cell 30 based on the detected open-circuit voltage Vm of measurement-directed solar cell 32.

Upon determining the operating voltage of solar cell 30, charge control ECU 40B sets that operating voltage at charge converter 20 as the target voltage VR of charge converter 20 (input voltage target value of charge converter 20) (step S230).

Likewise with the second embodiment, the third embodiment allows more charge from solar cell 30 to power storage device B1 to be ensured since it is not necessary to detect the open-circuit voltage with the power generation of solar cell 30 temporarily stopped in the third embodiment.

Likewise with the second embodiment, the operation of motor generator MG and auxiliary apparatus 80 receiving power supply from power storage device B1 becomes stable since voltage variation in power storage device B1 due to stoppage/activation of power generation from solar cell 30 is eliminated.

Although charge converter 20 is based on an insulation type DC-DC converter in each of the embodiments set forth above, the configuration of charge converter 20 is not limited thereto, and a chopper circuit, for example, may be employed.

Although vehicles 100, 100A and 100B set forth above correspond to an electric vehicle that employs motor generator MG as the driving source, the present invention is also applicable to a hybrid vehicle that has an engine further mounted as the power source, and to a fuel cell vehicle that has a fuel cell further mounted as the power source.

The above description is based on the case where a solar cell is incorporated in a vehicle. The solar photovoltaic power generation system of the present invention has an application other than for a vehicle. It is to be noted that the solar photovoltaic power generation system of the present invention is particularly suitable to be incorporated into a vehicle since a vehicle has a great change in the receiving amount of insolation, and there is a strong demand for reducing the cost.

In the foregoing, control by charge control ECU 40, 40A or 40B is implemented by a CPU (Central Processing Unit), in practice. The CPU reads out a program including respective steps of the flowchart shown in Fig. 4, 9 or 11 from a ROM (Read Only Memory) to execute the read program. Therefore, the ROM corresponds to a computer (CPU) readable recording medium recorded with a program including respective steps of the flowchart shown in Fig. 4, 9 or 11.

In the above description, charge converter 20 corresponds to "voltage control device" or "voltage conversion device" of the present invention. Charge control ECUs 40, 40A and 40B correspond to "control unit" of the present invention. Voltage sensor 50 corresponds to "voltage detection device" of the present invention. Temperature sensor 90 corresponds to "temperature detection device" of the present invention. Further, PCU 10 and motor generator MG constitute "driving device" of the present invention.

It will be understood that the embodiments of the present invention disclosed herein are by way of example only, and is not to be taken by way of limitation in all aspects. The scope of the present invention is defined, not by the description set forth above, but by the appended claims, and all changes that fall within limits and bounds of the claims, or equivalence thereof are intended to be embraced by the claims.

## Claims

1. A solar photovoltaic power generation system comprising:
a solar cell,
a voltage control device connected to said solar cell, and configured to allow control of an output voltage of said solar cell to be equal to a set target voltage, and
a control unit determining an operating voltage of said solar cell based on an open-circuit voltage of said solar cell, and setting the determined operating voltage as said target voltage.

2. The solar photovoltaic power generation system according to claim 1, further comprising a voltage detection device detecting the output voltage of said solar cell,
wherein said control unit determines the operating voltage of said solar cell based on the open-circuit voltage of said solar cell detected by said voltage detection device when power generation of said solar cell is stopped.

3. The solar photovoltaic power generation system according to claim 2,
wherein said control unit temporarily stops said voltage control device periodically or at a preset timing, and causes said voltage control device to resume its operation after said target voltage is set.

4. The solar photovoltaic power generation system according to claim 1, further comprising a temperature detection device detecting a temperature of said solar cell,
wherein said control unit estimates the open-circuit voltage of said solar cell based on the temperature of said solar cell detected by said temperature detection device.

5. The solar photovoltaic power generation system according to claim 4,
wherein said control unit fetches the temperature of said solar cell from said temperature detection device periodically or at a predetermined timing to estimate said open-circuit voltage.

6. The solar photovoltaic power generation system according to claim 1, further comprising a measurement-directed solar cell that is not connected with said voltage control device,
wherein said control unit determines the operating voltage of said solar cell based on the open-circuit voltage of said measurement-directed solar cell.

7. The solar photovoltaic power generation according to claim 6, wherein said control unit fetches the open-circuit voltage of said measurement-directed solar cell periodically or at a preset timing to determine said operating voltage.

8. A vehicle comprising:
a chargeable power storage device,
a driving device configured to allow generation of a motive force of the vehicle using power output from said power storage device,
a solar cell,
a voltage conversion device provided between said solar cell and said power storage device, and configured to convert power received from said solar cell to a voltage level of said power storage device such that said power storage device can be charged while controlling an output voltage of said solar cell to be equal to a set target voltage, and
a control unit determining an operating voltage of said solar cell based on an open-circuit voltage of said solar cell, and setting the determined operating voltage as said target voltage.

9. The vehicle according to claim 8, further comprising a voltage detection device detecting the output voltage of said solar cell,
wherein said control unit determines the operating voltage of said solar cell based on the open-circuit voltage of said solar cell detected by said voltage detection device when power generation of said solar cell is stopped.

10. The vehicle according to claim 9, wherein said control unit temporarily stops said voltage conversion device periodically or at a preset timing, and causes said voltage conversion device to resume its operation after said target voltage is set.

11. The vehicle according to claim 8, further comprising a temperature detection device detecting a temperature of said solar cell,
wherein said control unit estimates the open-circuit voltage of said solar cell based on the temperature of said solar cell detected by said temperature detection device.

12. The vehicle according to claim 11, wherein said control unit fetches the temperature of said solar cell from said temperature detection device periodically or at a predetermined timing to estimate said open-circuit voltage.

13. The vehicle according to claim 8, further comprising a measurement-directed solar cell that is not connected with said voltage conversion device,
wherein said control unit determines the operating voltage of said solar cell based on the open-circuit voltage of said measurement-directed solar cell.

14. The vehicle according to claim 13, wherein said control unit fetches the open-circuit voltage of said measurement-directed solar cell periodically or at a preset timing to determine said operating voltage.

15. A control method for a solar photovoltaic power generation system, said solar photovoltaic power generation system including
a solar cell, and
a voltage control device connected to said solar cell, and configured to allow control of an output voltage of said solar cell to be equal to a set target voltage,
said control method comprising:
a first step of determining an operating voltage of said solar cell based on an open-circuit voltage of said solar cell, and
a second step of setting the determined operating voltage as said target voltage.

16. The control method according to claim 15, further comprising a third step of detecting the output voltage of said solar cell,
wherein, at said first step, the operating voltage of said solar cell is determined based on the open-circuit voltage of said solar cell detected when power generation by said solar cell is stopped.

17. The control method according to claim 16, further comprising:
a fourth step of temporarily stopping said voltage control device periodically or at a preset timing, and
a fifth step of causing said voltage control device to resume its operation after said operating voltage is determined at said first step during stoppage of said voltage control device and said target voltage is set at said second step.

18. The control method according to claim 15, further comprising a sixth step of detecting a temperature of said solar cell,
wherein, at said first step, the open-circuit voltage of said solar cell is estimated based on the detected temperature of said solar cell.

19. The control method according to claim 18, wherein, at said first step, said open-circuit voltage is estimated based on the temperature of said solar cell detected periodically or at a preset timing.

20. The control method according to claim 15, wherein
said solar photovoltaic power generation system further includes a measurement-directed solar cell that is not connected with said voltage control device,
at said first step, the operating voltage of said solar cell is determined based on the open-circuit voltage of said measurement-directed solar cell.

21. The control method according to claim 20, wherein, at said first step, said operating voltage is determined based on the open-circuit voltage of said measurement-directed solar cell fetched periodically or at a preset timing.

22. A computer-readable recording medium recorded with a program to cause a computer to execute the control method defined in any one of claims 15-21.
